# EUROPÄISCHE PATENTSCHRIFT

(11) **EP 2 130 018 B1**
(45) Veröffentlichungstag und Bekanntmachung des Hinweises auf die Patenterteilung: **29.04.2015**
(21) Anmeldenummer: 08718096.4
(22) Anmeldetag: 20.03.2008
(51) Int. Cl.: H04R 1/08, H04R 19/04, H04R 1/38, G01L 9/00

(54) **Kapazitiver Aufnahmewandler und Mikrofon**
Capacitive electroacoustic transducer and microphone
Transducteur capacitif et microphone

(30) Priorität: 23.03.2007 DE 102007014577
(43) Veröffentlichungstag der Anmeldung: 09.12.2009
(73) Patentinhaber: Sennheiser electronic GmbH & Co. KG, 30900 Wedemark (DE)
(72) Erfinder: HEINE, Lars, 38179 Schwülper (DE); STAAT, Raimund, 30938 Burgwedel (DE); HINKE, Claus-Peter, 31303 Burgdorf (DE)
(74) Vertreter: Eisenführ Speiser
(86) Internationale Anmeldenummer: PCT/EP2008/053381
(87) Internationale Veröffentlichungsnummer: WO 2008/116828

(56) Entgegenhaltungen:
- WO-A-2005/115052
- DE-A1- 3 003 178
- DE-A1- 4 307 825
- GB-A- 1 428 844
- GB-A- 2 037 537
- GB-A- 2 400 769

## Beschreibung

Die vorliegende Erfindung betrifft einen kapazitiven Aufnahmewandler sowie ein entsprechendes Mikrofon.

Bei Mikrofonkapseln, welche nach dem Kondensatorprinzip arbeiten, d. h. eine Mikrofonkapsel mit einem kapazitiven Aufnahmewandler, muss ein wirksamer Schutz vor Verunreinigungen, Fremdpartikeln (Staub und Feuchtigkeitstropfen) für die internen Teile der Mikrofonkapsel vorgesehen werden. Hierbei ist jedoch zu beachten, dass der durch die Mikrofonkapsel aufzuzeichnende Schall ungehindert in bzw. an die schallwandelnden Bereiche der Mikrofonkapsel gelangen muss. Besonders zu schützende Bereiche der Mikrofonkapsel sind beispielsweise die elektrische Isolation der Elektrode und der Luftspalt zwischen der aktiven Membran und der Elektrode. Dieser Luftspalt ist typischerweise weniger Mikrometer breit und ist typischerweise durch Öffnungen in der Elektrode zugänglich. Wenn ein Fremdkörper in den Luftspalt eindringt, so kann er die freie Schwingung der aktiven Membran beeinflussen bzw. behindern. Ein derartiger Fremdkörper kann ferner dazu führen, dass Störsignale entstehen.

Wenn die Mikrofonkapsel als ein Schalldruckempfänger ausgestaltet wird, so kann die rückwärtige Seite des Wandlers, d. h. auf der Seite der Elektrode, durch ein entsprechend dimensioniertes Volumen verschlossen werden. Die andere Seite des Wandlers, d. h. die Vorderseite, muss für den aufzuzeichnenden Schall frei zugänglich sein. Von der Vorderseite des Wandlers ist der Luftspalt typischerweise durch die aktive Membran geschützt.

Wenn die Mikrofonkapsel als symmetrisch aufgebautes Wandlersystem ausgestaltet ist, so wird eine Membran vorgesehen, welche zwischen zwei Elektroden angeordnet ist, d. h. es wird eine zusätzliche Elektrode vorgesehen. Derartige symmetrisch aufgebaute Wandlersysteme sind insbesondere vorteilhaft bei einer professionellen Aufnahmetechnik, so dass der höhere konstruktive Aufwand durchaus gerechtfertigt ist. Hierbei ist jedoch darauf zu achten, dass die sensiblen Bereiche der Mikrofonkapsel gegen Umwelteinflüsse zu schützen sind. Dies erfolgt beispielsweise durch das Vorsehen eines Vlieses. Dabei wird das Vlies unmittelbar außen auf den Elektroden angebracht. Dieses Vlies muss jedoch sehr fein sein, um eine ausreichende mechanische Filterung vorzusehen. Andererseits werden durch das Vlies erhebliche akustische Verluste bewirkt, da der Schall nur an denjenigen Stellen durch das Vlies treten kann, an denen die Elektrode Öffnungen aufweist.

Durch eine derartige Ausgestaltung kann jedoch nur der Luftspalt, nicht jedoch die Isolierung der Elektrode beispielsweise vor Verunreinigungen geschützt werden. Um eine Robustheit eines kapazitiven Wandlers sicherzustellen, muss jedoch auch die Isolierung der Elektrode vor Verunreinigungen geschützt werden, damit das Mikrofon beispielsweise auch im Freien eingesetzt werden kann.

Es ist somit Aufgabe der vorliegenden Erfindung, einen kapazitiven Aufnahmewandler vorzusehen, welcher einen verbesserten Schutz der empfindlichen Bauelemente gewährleistet.

Diese Aufgabe wird durch einen kapazitiven Aufnahmewandler gemäß Anspruch 1 gelöst.

Somit wird ein kapazitiver Aufnahmewandler mit einer aktiven Membran und einem ersten und zweiten Membranträger vorgesehen. Die aktive Membran wird zwischen dem ersten und zweiten Membranträger aufgenommen bzw. dazwischen befestigt. Der erste und zweite Membranträger weist jeweils eine flächig ausgeführte Elektrode auf. Der Membranträger und die Elektrode sind derart miteinander verbunden, dass der Membranträger die Elektrode um ein vorgegebenes Maß überragt.

Gemäß einem Aspekt der vorliegenden Erfindung weist der erste und zweite Membranträger eine erste Seite auf, welche um einen ersten Abstand über eine erste Seite der Elektrode hinausragt. Die zweite Seite des Membranträgers ragt einen zweiten Abstand über die zweite Seite der Elektrode hinaus.

Gemäß einem weiteren Aspekt der vorliegenden Erfindung weist die erste und zweite Elektrode jeweils mindestens eine schalldurchlässige Öffnung auf.

Gemäß einem Aspekt der vorliegenden Erfindung weist der kapazitive Aufnahmewandler mindestens eine Schutzeinheit auf, welche an der zweiten Seite des Membranträgers zum Verdecken der zweiten Seite der Elektrode vorgesehen ist.

Die vorliegende Erfindung betrifft den Gedanken, einen kapazitiven Aufnahmewandler mit einer Membran und zwei symmetrisch zu der Membran angeordneten Elementen vorzusehen. Diese symmetrisch ausgeführten Elemente weisen dabei je einen Membranträger auf, welcher sowohl die Membran fixiert als auch eine flächig ausgeführte Elektrode an ihrem Umfang umschließt. Hierbei sind der Membranträger und die Elektroden derart miteinander verbunden, dass sie nicht in einer Ebene liegen. Hierbei stehen die Membranträger gegenüber der Elektrode vor bzw. die Membranträger überragen die Elektroden, so dass eine Stufe gebildet wird und so dass die Elektrode einen hinreichenden Abstand zur Membran aufweist, durch welchen ein Luftspalt ausgebildet wird.

Die vorliegende Erfindung betrifft ebenfalls den Gedanken, ein Schutzelement an zumindest einer Seite des kapazitiven Aufnahmewandlers vorzusehen. Das Schutzelement kann ein weitgehend geschlossenes Element mit kleinen Öffnungen darstellen, wobei die Öffnungen derart ausgestaltet sind, dass sie schalldurchlässig aber verschmutzungsundurchlässig ausgestaltet sind. Das Schutzelement wird derart an mindestens einer der beiden Seiten des kapazitiven Aufnahmewandlers angeordnet, dass ein Abstand zur Elektrode vorhanden ist. Das Schutzelement kann als eine Membran ausgestaltet sein. Das Schutzelement kann ferner als eine Membran mit kleinen Öffnungen derart ausgestaltet sein, dass die Membran schalldurchlässig aber verschmutzungsundurchlässig ausgestaltet ist. Zusätzlich dazu können die Schutzelemente elektrisch leitend ausgestaltet sein und elektrisch leitend mit der aktiven Membran verbunden werden.

Weitere Ausgestaltungen der Erfindung sind Gegenstand der Unteransprüche.

Ausführungsbeispiele und Vorteile der vorliegenden Erfindung werden nachstehend unter Bezugnahme auf die Figuren näher beschrieben.
- Fig. 1a: zeigt eine schematische Darstellung eines kapazitiven Aufnahmewandlers gemäß einem ersten Ausführungsbeispiel,
- Fig. 1b: zeigt eine schematische Darstellung eines kapazitiven Aufnahmewandlers gemäß einem zweiten Ausführungsbeispiel,
- Fig. 1c: zeigt eine schematische Darstellung eines kapazitiven Aufnahmewandlers gemäß einem dritten Ausführungsbeispiel, und
- Fig. 2: zeigt eine Schnittansicht eines Schutzelementes gemäß einem Ausführungsbeispiel der Erfindung.

Die nachfolgend beschriebenen kapazitiven Aufnahmewandler können beispielsweise in einem Mikrofon bzw. in einer Mikrofonkapsel vorgesehen werden.

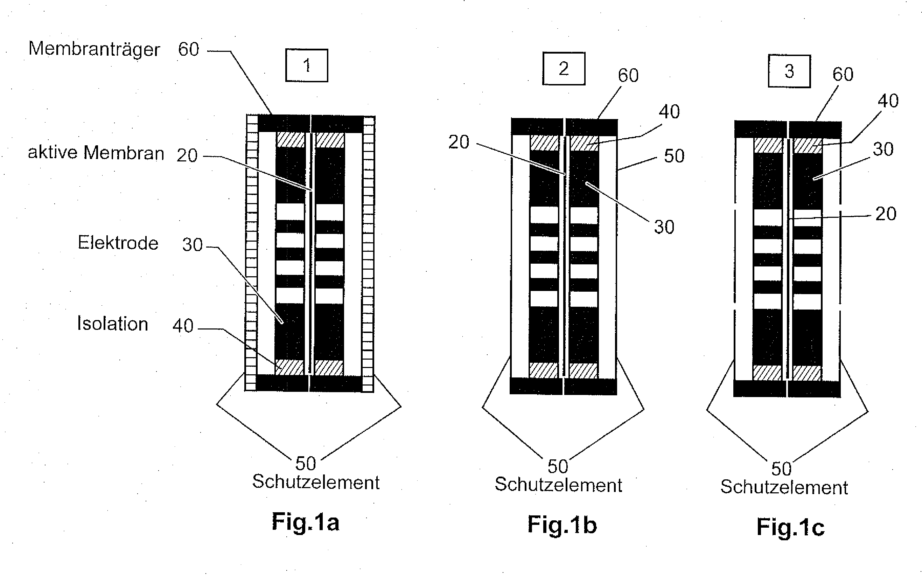

Fig. 1a zeigt eine schematische Schnittdarstellung eines kapazitiven Aufnahmewandlers gemäß einem ersten Ausführungsbeispiel. Der kapazitive Aufnahmewandler 10 weist eine aktive Membran 20, zwei Elektroden 30, Isolationseinheiten 40 und zwei Membranträger 60 auf. Zwischen den beiden Elektroden 30 ist die aktive Membran 20 vorgesehen, welche von den beiden Membranträgern gehalten wird. Die beiden Membranträger 60 nehmen jeweils eine der Elektroden auf. Zwischen den Elektroden 30 und dem Membranträger 60 ist jeweils eine Isolationseinheit 40 vorgesehen. Die aktive Membran 60 wird durch den Membranträger 60 getragen bzw. gehalten. Hierbei weist der Membranträger eine erste Seite 61 zum Halten der aktiven Membran und eine zweite Seite 62 auf. Der Membranträger 60 ist derart ausgestaltet, dass er an seiner zweiten Seite 62 um ein vorgegebenes Maß über die Elektrode 30 hinausragt. An der zweiten Seite 62 kann ein Schutzelement 50 vorgesehen werden. Somit kann auf beiden Seiten des kapazitiven Aufnahmewandlers jeweils ein Schutzelement 50 vorgesehen werden.

Der kapazitive Aufnahmewandler gemäß dem ersten Ausführungsbeispiel ist insbesondere für einen Druckgradientenempfänger mit beispielsweise einer Nierenrichtcharakteristik geeignet. Bei einer derartigen Ausgestaltung wird das ursprüngliche Übertragungsverhalten eines kapazitiven Aufnahmewandlers ohne Schutzelemente nur geringfügig beeinflusst. Dies lässt sich dadurch begründen, dass der kapazitive Aufnahmewandler bereits erhebliche akustische Widerstände in dem Luftspalt (zwischen der aktiven Membran 20 und der Elektrode 30) überwinden muss. Die Verluste, welche durch das Vorsehen der Schutzelemente 50 bewirkt werden, tragen nur in einem geringen Maße zu den Gesamtverlusten bei.

Das Schutzelement 50 kann gemäß dem ersten Ausführungsbeispiel als ein weitestgehend geschlossenes Schutzelement ausgestaltet sein, wobei kleine Öffnungen vorgesehen werden, welche schalldurchlässig aber verschmutzungsundurchlässig ausgestaltet sind. Das Schutzelement 50 gemäß dem ersten Ausführungsbeispiel kann beispielsweise ein Gewebe, z. B. Vlies, eine gelochte Scheibe darstellen oder kann aus einem porösen Material hergestellt sein.

Fig. 1b zeigt eine schematische Schnittansicht eines kapazitiven Aufnahmewandlers gemäß dem zweiten Ausführungsbeispiel. Hierbei entspricht der Aufbau des kapazitiven Wandlers gemäß dem zweiten Ausführungsbeispiel im Wesentlichen dem Aufbau des kapazitiven Wandlers gemäß dem ersten Ausführungsbeispiel. Somit weist der kapazitive Aufnahmewandler eine aktive Membran 20 zwischen zwei Elektroden 30 auf. Die Elektroden 30 sind jeweils über Isolationseinheiten 40 mit einem Membranträger 60 verbunden. Der Membranträger 60 dient der Aufnahme der aktiven Membran 20.

Auch gemäß dem zweiten Ausführungsbeispiel werden Schutzelemente 50 an den zweiten Seiten des Membranträgers 60 vorgesehen.

Die Schutzelemente 50 gemäß dem zweiten Ausführungsbeispiel sind beispielsweise als eine Membran ausgestaltet. Dadurch, dass die zweite Seite des Membranträgers 60 über die Elektrode 30 hinausragt, kann das Schutzelement 50 durch Schallwellen zum Schwingen angeregt werden.

Der kapazitive Schallwandler gemäß dem zweiten Ausführungsbeispiel kann insbesondere als Druckempfänger verwendet werden. Hierbei wird die Membran des Wandlers sehr steif ausgestaltet, so dass eine geringe Steifigkeit der zusätzlichen Membranen (Schutzelemente 50) nicht ins Gewicht fällt. Der kapazitive Aufnahmewandler gemäß dem zweiten Ausführungsbeispiel ist insbesondere dann vorteilhaft, wenn eine völlige Abdichtung des Wandlers sowohl vor Verunreinigungen als auch vor Wasserdampf gewünscht wird.

Fig. 1c zeigt eine schematische Schnittansicht eines kapazitiven Wandlers gemäß einem dritten Ausführungsbeispiel. Hierbei entspricht der Aufbau des kapazitiven Wandlers gemäß dem dritten Ausführungsbeispiel im Wesentlichen dem Aufbau der kapazitiven Wandler gemäß dem ersten oder zweiten Ausführungsbeispiel. Lediglich die Schutzelemente 50 gemäß dem dritten Ausführungsbeispiel unterscheiden sich von den Schutzelementen 50 gemäß dem ersten oder zweiten Ausführungsbeispiel. Die Schutzelemente gemäß dem dritten Ausführungsbeispiel weisen eine Membran auf, welche kleine Öffnungen aufweist, welche derart ausgestaltet sind, dass sie schalldurchlässig aber verschmutzungsundurchlässig ist. Durch die Ausgestaltung der zweiten Seite 62 des Membranträgers 60 wird gewährleistet, dass ein vorgegebener Abstand zwischen der Elektrode 30 und dem Schutzelement 50 vorgesehen ist.

Der kapazitive Aufnahmewandler gemäß dem dritten Ausführungsbeispiel entspricht somit im Wesentlichen einer Kombination der kapazitiven Aufnahmewandler gemäß dem ersten und zweiten Ausführungsbeispiel. Genauer gesagt entspricht das Schutzelement 50 gemäß dem dritten Ausführungsbeispiel einer Kombination der Schutzelemente gemäß dem ersten und zweiten Ausführungsbeispiel.

Der kapazitive Wandler gemäß dem dritten Ausführungsbeispiel kann beispielsweise in einem Druckgradientenempfänger implementiert werden, wobei dieser Empfänger eine Nierenrichtcharakteristik aufweist und wobei der Frequenzgang und die Richtwirkung gezielt vor allen Dingen bei tiefen Frequenzen verstärkt bzw. reduziert werden können. Dies kann beispielsweise durch das Vorsehen der Öffnungen bzw. durch die Ausgestaltung der Öffnungen bewirkt werden.

Die Schutzelemente gemäß dem ersten, zweiten oder dritten Ausführungsbeispiel können elektrisch leitend ausgestaltet sein. Vorzugsweise sind die Schutzelemente ebenfalls elektrisch leitend mit der aktiven Membran verbunden bzw. gekoppelt.

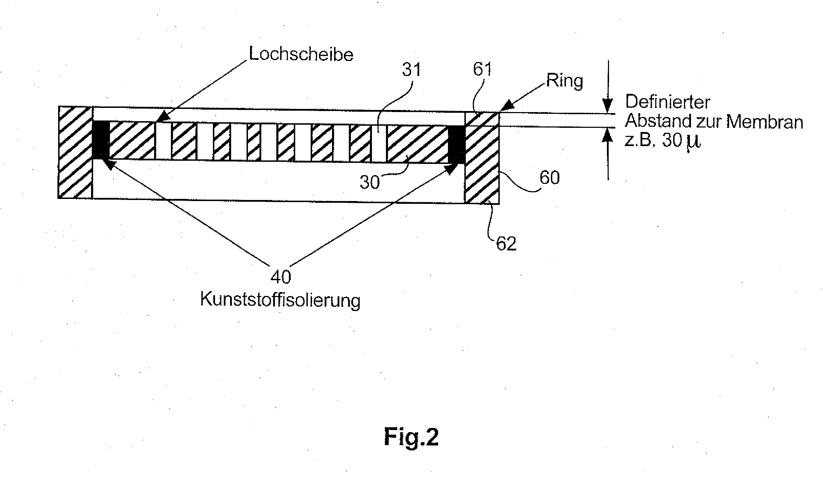

Fig. 2 zeigt eine schematische Schnittansicht eines Membranträgers. Dieser Membranträger kann als Membranträger in dem ersten, zweiten oder dritten Ausführungsbeispiel eingesetzt werden und ist beispielsweise als eine Systemscheibe ausgestaltet und weist eine erste Seite 61 und eine zweite Seite 62 auf. Die erste Seite 61 dient dabei dazu, die aktive Membran des Aufnahmewandlers aufzunehmen. Die erste Seite 61 ist dabei derart ausgestaltet, dass sie um einen ersten Abstand über die erste Seite der Elektrode hinausragt. Dieser definierte Abstand kann beispielsweise 30 Mikrometer aufweisen. Die zweite Seite 62 des Membranhalters 60 ist ebenfalls derart ausgestaltet, dass sie um ein vorgegebenes Maß über die zweite Seite der Elektrode hinausragt.

Die Elektrode 30 kann eine Vielzahl von Löchern 31 aufweisen, so dass die Elektrode als eine Lochscheibe ausgestaltet sein kann. Zwischen der Elektrode und dem Membranhalter 60 sind jeweils Kunststoffisolierungen 40 vorgesehen.

Der Membranhalter 60 kann beispielsweise als ein Ring ausgestaltet sein. Der Ring und die Lochscheibe können beispielsweise eingespritzt oder eingegossen werden.

Für einen symmetrischen kapazitiven Aufnahmewandler werden zwei der Membranträger 60 benötigt, wobei eine aktive Membran 20 zwischen der ersten Seite 61 eines ersten Membranträgers 60 und der ersten Seite 61 eines zweiten Membranträgers angeordnet wird. Hierbei können die beiden Membranträger beispielsweise durch die aktive Membran mittels Klebstoff verbunden werden.

Die Schutzelemente 50 werden jeweils an der zweiten Seite 62 des Membranträgers 60 angeordnet. Dies kann beispielsweise durch einen elastischen Klebstofffilm erfolgen. Dabei kann der Klebstofffilm gleichzeitig Toleranzen ausgleichen.

Somit weist der kapazitive Aufnahmewandler eine aktive Membran auf, welche zwischen zwei Membranträgern gehalten wird, welche symmetrisch ausgestaltet sind. In den Membranträgern ist jeweils eine flächig ausgestaltete Elektrode vorgesehen. Der Membranträger weist eine erste Seite zur Aufnahme der aktiven Membran und eine zweite Seite auf, welche über die Elektrode hinausragt. Die Elektroden können dabei Öffnungen aufweisen, durch welche Schall zu der aktiven Membran gelangen kann. Der Membranträger ist derart ausgestaltet, dass sowohl seine erste als auch seine zweite Seite über die Elektrode vorsteht. An der zweiten Seite des Membranträgers kann ein vorzugsweise scheibenförmiges Schutzelement angeordnet werden, welches dadurch eine rückwärtige Fläche der Elektroden verdeckt. Das Schutzelement kann mindestens eine Öffnung aufweisen, welche schalldurchlässig, jedoch verschmutzungsundurchlässig ist. Das Schutzelement kann ebenfalls als eine Membran ohne Löcher ausgestaltet sein. Das Schutzelement kann ferner als eine Membran mit mindestens einer Öffnung ausgestaltet sein, wobei die Öffnung schalldurchlässig und verschmutzungsundurchlässig ausgestaltet ist. Der Membranträger kann Schlitze aufweisen, durch welche eine elektrische Leitung zu den durch den Membranträger aufgenommenen Elektroden geführt werden kann. Zwischen dem Membranträger und der Elektrode ist eine Isolationseinheit vorgesehen. Die aktive Membran kann beidseitig elektrisch leitend ausgestaltet sein. Die Membran kann einen elektrischen Kontakt zu dem Membranträger aufweisen. Membranträger und die aktive Membran können miteinander verklebt sein. Die beiden Membranträger können miteinander verschraubt werden, um die aktive Membran zu fixieren. Der Membranträger und die Elektrode können über einen isolierenden Kunststoff miteinander verbunden sein, d. h. der isolierende Kunststoff dient als Isolationseinheit.

Alternativ dazu können die Elektroden über einen isolierenden Träger ausgestaltet sein, wobei eine leitende Beschichtung auf dem isolierenden Träger vorgesehen wird. Auf den Elektroden kann ein schalldurchlässiges Dämpfungselement angeordnet sein. Auf der zweiten Seite des Membranträgers kann ein Element vorgesehen werden, welches die Elektrode abdeckt und ein Volumen zur Elektrode hin ausbildet. Dieses Element kann optional mindestens eine Schallöffnung zur Elektrode hin aufweisen. Diese Öffnung kann beispielsweise durch ein schalldämpfendes Element verschlossen werden.

In dem oben beschriebenen kapazitiven Wandler kann ein Vlies zwischen der Elektrode und dem Schutzelement 50 vorgesehen werden, wobei der Vlies vorzugsweise die gesamte Fläche der Elektrode abdeckt. Hierbei deckt das Vlies nicht die Fläche der Isolationseinheiten 40 ab.

Somit wird ein kapazitiver Aufnahmewandler mit einer aktiven Membran und einem ersten und zweiten Membranträger vorgesehen. Die aktive Membran wird zwischen dem ersten und zweiten Membranträger aufgenommen. Der erste und zweite Membranträger weisen jeweils eine flächig ausgeführte Elektrode auf, wobei der Membranträger und die Elektrode derart miteinander verbunden sind, dass der Membranträger die Elektrode um ein vorgegebenes Maß überragt. Der Membranträger weist eine erste Seite auf, welche um einen ersten vorgegebenen Abstand über eine erste Seite der Elektrode hinausragt, und eine zweite Seite, welche um einen zweiten Abstand über die zweite Seite der Elektrode hinausragt. Die erste und zweite Elektrode weisen jeweils mindestens eine schalldurchlässige Öffnung auf. Der kapazitive Aufnahmewandler kann mindestens eine Schutzeinheit aufweisen, welche an der zweiten Seite des Membranträgers zum Verdecken der zweiten Seite der Elektrode vorgesehen ist. Das Schutzelement kann dabei mindestens eine Öffnung aufweisen, welche schalldurchlässig und verschmutzungsundurchlässig ausgestaltet ist. Das Schutzelement kann dabei als eine Membran ausgestaltet sein bzw. eine Membran aufweisen. Die Membran kann mindestens eine Öffnung aufweisen, welche schalldurchlässig und verschmutzungsundurchlässig ausgestaltet ist.

Der Membranträger und die Elektrode sind elektrisch leitend ausgestaltet, aber elektrisch voneinander isoliert. Die aktive Membran kann auf beiden Seiten elektrisch leitend ausgestaltet sein. Der Membranträger und die aktive Membran können elektrisch miteinander verbunden sein. Die aktive Membran und der Membranträger können miteinander verklebt sein. Der erste und zweite Membranträger können miteinander verschraubt werden, so dass die aktive Membran fixiert wird. Der Membranträger und die Elektrode können über isolierenden Kunststoff miteinander verbunden sein. Die Elektroden können einen isolierenden Träger sowie mindestens eine elektrisch leitende Beschichtung aufweisen. Der kapazitive Aufnahmewandler kann ein schalldurchlässiges Dämpfungselement aufweisen, welches auf einer der Elektroden aufgebracht ist.

## Patentansprüche

1. Kapazitiver Aufnahmewandler, mit
einer aktiven Membran (20),
einem ersten und zweiten Membranträger (60), wobei die aktive Membran (20) zwischen dem ersten und zweiten Membranträger (60) aufgenommen wird,
wobei jeweils eine flächig ausgeführte Elektrode (30) an dem ersten und zweiten Membranträger (60) angeordnet ist,
wobei der Membranträger (60) und die Elektrode (30) derart miteinander verbunden sind, dass der Membranträger (60) die Elektrode (30) um ein vorgegebenes Maß senkrecht zu der flächig ausgeführten Elektrode (30) überragt,
**dadurch gekennzeichnet, dass**
der Membranträger (60) und die Elektrode (30) elektrisch leitend ausgestaltet sind und elektrisch voneinander isoliert miteinander gekoppelt sind,
wobei der Membranträger (60) und die aktive Membran (20) elektrisch miteinander gekoppelt sind,
wobei der Membranträger (60) die Elektrode (30) umschließt, und
wobei ein isolierender Träger (40) zwischen der Elektrode (30) und dem ersten oder zweiten Membranträger (60) angeordnet ist.

2. Kapazitiver Aufnahmewandler nach Anspruch 1, wobei der erste und zweite Membranträger (60) eine erste Seite (61) aufweist, welche um einen ersten Abstand über eine erste Seite der Elektrode (30) hinausragt, wobei die zweite Seite (62) des Membranträgers (60) um einen zweiten Abstand über die zweite Seite der Elektrode hinausragt.

3. Kapazitiver Aufnahmewandler nach einem der Ansprüche 1 oder 2, wobei die erste und zweite Elektrode (30) jeweils mindestens eine schalldurchlässige Öffnung (31) aufweisen.

4. Kapazitiver Aufnahmewandler nach einem der Ansprüche 1 bis 3, mit mindestens einer Schutzeinheit (50), welche an der zweiten Seite (62) des Membranträgers (60) zum Verdecken der zweiten Seite der Elektrode (30) vorgesehen ist.

5. Kapazitiver Aufnahmewandler nach Anspruch 4, wobei das Schutzelement (50) mindestens eine Öffnung aufweist, welche schalldurchlässig und verschmutzungsundurchlässig ausgestaltet ist.

6. Kapazitiver Aufnahmewandler nach Anspruch 5, wobei das Schutzelement (50) eine Membran insbesondere mit mindestens einer Öffnung aufweist, welche schalldurchlässig und verschmutzungsundurchlässig ausgestaltet ist.

7. Kapazitiver Aufnahmewandler nach einem der vorherigen Ansprüche, wobei die aktive Membran (20) auf beiden Seiten elektrisch leitend ausgestaltet ist.

8. Kapazitiver Aufnahmewandler nach einem der Ansprüche 1 bis 7, wobei die aktive Membran (20) und der Membranträger (60) miteinander verklebt sind.

9. Kapazitiver Aufnahmewandler nach einem der Ansprüche 1 bis 8, wobei der erste und zweite Membranträger (60) miteinander verschraubt sind und somit die aktive Membran (20) fixieren.

10. Kapazitiver Aufnahmewandler nach einem der Ansprüche 1 bis 9, wobei die Elektroden (30) mindestens eine elektrisch leitende Beschichtung aufweisen.

11. Kapazitiver Aufnahmewandler nach einem der Ansprüche 1 bis 10, ferner mit einem schalldurchlässigen Dämpfungselement, welches auf einer der Elektroden (30) angebracht ist.

12. Kapazitiver Aufnahmewandler nach einem der Ansprüche 1 bis 11, mit einem Element zum Abdecken der Elektrode, wobei durch das Element ein Volumen zur Elektrode hin ausgebildet wird, wobei das Element an der zweiten Seite der Elektrode angeordnet wird,
wobei das Element mindestens eine Schallöffnung zur Elektrode hin aufweist,
wobei die Schallöffnung ein schalldämpfendes Element aufweist.

13. Kapazitiver Aufnahmewandler nach einem der Ansprüche 1 bis 12, wobei der erste und zweite Membranträger (60) symmetrisch ausgestaltet sind.

14. Mikrofon mit einem kapazitiven Aufnahmewandler nach einem der Ansprüche 1 bis 13.

## Claims

1. Capacitive electroacoustic transducer, having an active diaphragm (20),
a first and a second diaphragm carrier (60), the active diaphragm (20) being received between the first and the second diaphragm carrier (60),
an electrode (30) which is constructed in a planar manner being arranged on the first and second diaphragm carrier (60), the diaphragm carrier (60) and the electrode (30) being connected to each other in such a manner that the diaphragm carrier (60) projects above the electrode (30) by a predetermined measurement perpendicularly to the electrode (30) which is constructed in a planar manner,
**characterised in that**
the diaphragm carrier (60) and the electrode (30) are constructed in an electrically conductive manner and are coupled to each other so as to be electrically insulated from each other,
the diaphragm carrier (60) and the active diaphragm (20) being electrically coupled to each other,
the diaphragm carrier (60) surrounding the electrode (30), and
an insulating carrier (40) being arranged between the electrode (30) and the first or second diaphragm carrier (60).

2. Capacitive electroacoustic transducer according to claim 1, wherein the first and second diaphragm carrier (60) has a first side (61) which protrudes by a first distance beyond a first side of the electrode (30), wherein the second side (62) of the diaphragm carrier (60) protrudes by a second distance beyond the second side of the electrode.

3. Capacitive electroacoustic transducer according to either claim 1 or claim 2, wherein the first and second electrode (30) each have at least one noise-permeable opening (31).

4. Capacitive electroacoustic transducer according to any one of claims 1 to 3, having at least one protection unit (50) which is provided on the second side (62) of the diaphragm carrier (60) in order to conceal the second side of the electrode (30).

5. Capacitive electroacoustic transducer according to claim 4, wherein the protection element (50) has at least one opening which is constructed so as to be noise-permeable and non-permeable with respect to contamination.

6. Capacitive electroacoustic transducer according to claim 5, wherein the protection element (50) has a diaphragm in particular having at least one opening which is constructed so as to be noise-permeable and non-permeable with respect to contamination.

7. Capacitive electroacoustic transducer according to any one of the preceding claims, wherein the active diaphragm (20) is constructed so as to be electrically conductive at both sides.

8. Capacitive electroacoustic transducer according to any one of claims 1 to 7, wherein the active diaphragm (20) and the diaphragm carrier (60) are adhesively bonded to each other.

9. Capacitive electroacoustic transducer according to any one of claims 1 to 8, wherein the first and second diaphragm carrier (60) are screwed to each other and consequently fix the active diaphragm (20).

10. Capacitive electroacoustic transducer according to any one of claims 1 to 9, wherein the electrodes (30) have at least one electrically conductive coating.

11. Capacitive electroacoustic transducer according to any one of claims 1 to 10, further having a noise-permeable damping element which is fitted to one of the electrodes (30).

12. Capacitive electroacoustic transducer according to any one of claims 1 to 11, having an element for covering the electrode, wherein a space in the direction towards the electrode is formed by the element, wherein the element is arranged at the second side of the electrode,
wherein the element has at least one noise opening in the direction towards the electrode,
wherein the noise opening has a noise-damping element.

13. Capacitive electroacoustic transducer according to any one of claims 1 to 12, wherein the first and second diaphragm carrier (60) are constructed in a symmetrical manner.

14. Microphone having a capacitive electroacoustic transducer according to any one of claims 1 to 13.

## Revendications

1. Transducteur récepteur capacitif, avec
une membrane active (20),
un premier et un second support de membrane (60), la membrane active (20) étant logée entre le premier et le second support de membrane (60),
une électrode (30) de forme plane étant disposée au niveau de chaque premier et second support de membrane (60),
le support de membrane (60) et l'électrode (30) étant reliés entre eux de manière telle que le support de membrane (60) surplombe l'électrode (30) d'une cote prédéfinie et perpendiculairement à l'électrode (30) de forme plane,
**caractérisé en ce que**
le support de membrane (60) et l'électrode (30) sont conçus électroconducteurs et sont couplés l'un à l'autre mais isolés électriquement l'un de l'autre
le support de membrane (60) et la membrane active (20) étant couplés électriquement l'un avec l'autre,
le support de membrane (60) entourant l'électrode (30), et
un support (40) isolant étant disposé entre l'électrode (30) et le premier ou le second support de membrane (60).

2. Transducteur récepteur capacitif selon la revendication 1, le premier et le second support de membrane (60) comprenant une première face (61) qui fait saillie d'une première distance au-delà d'une première face de l'électrode (30), la seconde face (62) du support de membrane (60) faisant saillie d'une seconde distance au-delà de la seconde face de l'électrode.

3. Transducteur récepteur capacitif selon la revendication 1 ou 2, la première et la seconde électrode (30) comprenant chacune au moins une ouverture perméable au son (31).

4. Transducteur récepteur capacitif selon la revendication 1 à 3, avec au moins une unité protectrice (50) qui est prévue sur la seconde face (62) du support de membrane (60) pour cacher la seconde face de l'électrode (30).

5. Transducteur récepteur capacitif selon la revendication 4, l'élément protecteur (50) comprenant au moins une ouverture qui est conçue perméable au son et imperméable aux saletés.

6. Transducteur récepteur capacitif selon la revendication 5, l'élément protecteur (50) comprenant une membrane en particulier avec au moins une ouverture qui est conçue perméable au son et imperméable aux saletés.

7. Transducteur récepteur capacitif selon l'une quelconque des revendications précédentes, la membrane active (20) étant conçue électroconductrice sur ses deux faces.

8. Transducteur récepteur capacitif selon l'une quelconque des revendications 1 à 7, la membrane active (20) et le support de membrane (60) étant collés ensemble.

9. Transducteur récepteur capacitif selon l'une quelconque des revendications 1 à 8, le premier et le second support de membrane (60) étant vissés l'un avec l'autre et immobilisant de cette façon la membrane active (20).

10. Transducteur récepteur capacitif selon l'une quelconque des revendications 1 à 9, les électrodes (30) comprenant au moins un revêtement électroconducteur.

11. Transducteur récepteur capacitif selon l'une quelconque des revendications 1 à 10, avec en plus un élément amortisseur perméable au son qui est appliqué sur une des électrodes (30).

12. Transducteur récepteur capacitif selon l'une quelconque des revendications 1 à 11, avec un élément servant au recouvrement de l'électrode, un volume vers l'électrode étant formé par l'élément, l'élément étant disposé contre la seconde face de l'électrode,
l'élément comprenant au moins une ouverture sonore vers l'électrode,
l'ouverture sonore comprenant un élément amortissant le bruit.

13. Transducteur récepteur capacitif selon l'une quelconque des revendications 1 à 12, le premier et le second support de membrane (60) étant conçus de manière symétrique.

14. Microphone avec un transducteur récepteur capacitif selon l'une quelconque des revendications 1 à 13.
